# EUROPÄISCHE PATENTANMELDUNG

(11) **EP 1 103 298 A1**
(43) Veröffentlichungstag der Anmeldung: **30.05.2001**
(21) Anmeldenummer: 00123835.1
(22) Anmeldetag: 02.11.2000
(51) Int. Cl.: B01D 53/94, F01N 3/20, F01N 3/28

(54) **Verfahren zur Oxidation von NO, CO, Kohlenwasserstoffen und Kohlenstoffpartikeln im Abgas von aufgeladenen Brennkraftmaschinen**

(30) Priorität: 25.11.1999 DE 19956671
(71) Anmelder: MAN NUTZFAHRZEUGE AG, 80995 München (DE)
(72) Erfinder: Döring, Andreas, Dipl.-Ing., 90403 Nürnberg (DE); Jacob, Eberhard, Dr., 82152 Krailing (DE); Hübner, Andre, Dipl.-Ing., 65719 Hofheim (DE)

(57) **Zusammenfassung**

Die Erfindung bezieht sich auf ein Verfahren zur Verbesserung von Oxidationsreaktionen im Abgas von aufgeladenen Brennkraftmaschinen durch Pulsbeaufschlagung von Katalysatoren. Ziel der Erfindung ist die signifikante Reduzierung von schädlichen Abgaskomponenten ohne hohen baulichen Aufwand. Erfindungsgemäß wird dies durch katalytisch aktive Beschichtung der vom Abgas berührten Oberflächen im Bereich zwischen dem Auslaßventil und dem Ausgang der Abgasturbine erreicht, insbesonders dort, wo hohe turbulente Strömung herrscht, wie z.B. im Laufrad der Abgasturbine. Vor dem Austritt aus der Abgasturbine wird eine kleine Partikelgröße beobachtet, weshalb sich die Partikel leicht abscheiden und katalytisch oxidieren lassen. Durch das erfindungsgemäße Verfahren ist konstruktiv kein Mehraufwand erforderlich. Da Filter entfallen entsteht kein erhöhter Gegendruck, so daß Leistung und Wirkungsgrad der Brennkraftmaschine nicht beeinträchtigt werden.

## Beschreibung

Die Erfindung bezieht sich auf ein Verfahren gemäß dem Gattungsbegriff des Patentanspruches 1.

Bei der motorischen Verbrennung kommt es zur Emission von unerwünschten Reaktionsprodukten wie NOₓ und auf Grund unvollständiger Verbrennung zur Bildung kohlenstoffhaltiger Partikel, CO und Kohlenwasserstoffen. Stand der Technik ist es, diese Stoffe durch einen mindestens platin- und/oder palladiumhaltigen Katalysator, der stromab der Abgasturbine angebracht ist, katalytisch zu oxidieren, wobei Raumgeschwindigkeiten ( Volumenstrom geteilt durch Katalysatorvolumen ) von 350.000 h⁻¹ und Flächengeschwindigkeiten ( Volumenstrom geteilt durch Katalysatorfläche ) von 100 m/h typische Werte für die verwendeten Katalysatoren darstellen. Unterstützt durch die katalytische Oxidation von NO zu NO₂ wird die Oxidation der kohlenstoffhaltigen Partikel zu CO und CO₂ erleichtert und so die Partikelemission verringert. Zudem wird die Aktivität von nachgeschalteten Reduktionskatalysatoren durch den erhöhten NO₂-Anteil und die hohe Reaktivität von NO₂ deutlich verbessert. Durch die Oxidation von CO zu CO₂ sowie der Kohlenwasserstoffe zu CO₂ und H₂O werden die Emissionen dieser limitierten Abgaskomponenten verringert und, wie schon beim NO₂, die Aktivität nachgeschalteter Katalysatoren verbessert.

Aufgabe der Erfindung ist es, den Raumbedarf und den Abgasgegendruck der für die Erzeugung von NO₂ und die Oxidation von Kohlenstoffpartikel, CO und HC erforderlichen Baugruppen signifikant zu reduzieren.

Gelöst wird diese Aufgabe durch die kennzeichnenden Merkmale des Patentanspruches 1.

Durch das erfmdungsgemäße Verfahren ist es möglich, die Raumgeschwindigkeiten auf über 15.000.000 h⁻¹ und die Flächengeschwindigkeiten auf über 5.000 m/h zu steigern. Die Ursachen für derart hohe Raum- und Flächengeschwindigkeiten resultieren aus den starken Druckoszillationen zwischen Zylinderkopf und Abgasturbine. Durch diese wird der Stofftransport an die katalytisch beschichteten Oberflächen verbessert und bei den vorliegenden stofftransportlimitierten Reaktionen die Reaktionsgeschwindigkeit deutlich erhöht. Zusätzlich werden die Reaktionen noch durch die hohen Temperatur- und Druckverhältnisse beschleunigt. Die Folge dieser Effekte ist die wesentliche Verkleinerung der Baugruppen. In der Regel werden die abgasberührten Oberflächen von Motorbauteilen und Motoranbauteilen wie Abgaskrümmer, Auslaßventile und Abgasturbine genügen, ohne daß zusätzliche Baugruppen, wie z.B. Katalysatorträger, erforderlich werden. Dies hat den Vorteil, daß keine motorfremden Bauteile in den Abgasstrang integriert werden müssen, die einen merklichen Gegendruck erzeugen, der sich in erhöhtem Verbrauch und Leistungseinbußen niederschlägt.

Eine vorteilhafte Weiterbildung ist Anspruch 2 zu entnehmen.

Bei Beschichtung mit Katalysator in Zonen besonders turbulenter Strömung, wie z.B. an den Auslaßventilen, dem Turbinenlaufrad und dem Turbinengehäuse, wird eine weitergehende Verkleinerung der aktiven Oberflächen erreicht, da hier der Stofftransport nochmals verbessert wird.

Vorteilhafte Gestaltung der aktiven Oberfläche und Verfahren zur Aufbringung der katalytisch wirksamen Beschichtung sind den Ansprüchen 3 bis 11 zu entnehmen.

Eine Vergrößerung der aktiven Oberflächen kann nach Anspruch 12 durch Trägerstrukturen im Abgaskrümmer erreicht werden.

Weitere vorteilhafte Maßnahmen zur Abgasnachbehandlung sind den Ansprüchen 13 und 14 zu entnehmen.

Das erfindungsgemäße Verfahren wird an Hand von Figuren erläutert. Es zeigt:
- Fig. 1: einen Verlauf der Druckoszillationen in einem Abgaskrümmer
- Fig. 2: einen Abgaskrümmer mit Steckbuchse
- Fig. 3: eine Brennkraftmaschine mit Abgasturbolader und nachgeschaltetem Katalysatorsystem
- Fig. 4: CO-Umsatzraten an einer vor dem Abgasturbolader in den Abgastrakt eingebrachten Trägerstruktur mit katalytischer Beschichtung
- Fig. 5: Kohlenwasserstoff-Umsatz an einer vor dem Abgasturbolader in den Abgastrakt eingebrachten Trägerstruktur mit katalytischer Beschichtung

Der allgemeine Erfindungsgedanke zur Verkleinerung der katalytisch wirksamen Oberfläche liegt darin, die hohen Turbulenz und Schwingungsgrade, sowie das hohe Druck- und Temperaturniveau im Abgastrakt im Bereich zwischen dem Auslaßventil und dem Austritt der Abgasturbine zu nutzen.

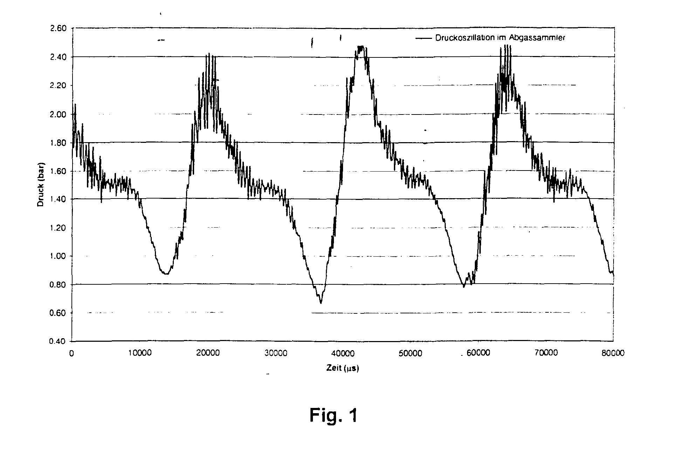

In Figur 1 sind die starke Druckoszillation und das hohe Spitzendruckniveau im Abgaskrümmer vor dem Abgasturbolader dargestellt.

Da die Reaktionsgeschwindigkeit und damit die Konvertierungsrate am Katalysator mit steigender Temperatur und steigendem Druck sowie niedrigeren Stofftransportwiderständen, hervorgerufen durch Druckoszillation sowie hohe Turbulenzgrade, deutlich ansteigen, lassen sich die benötigten Katalysatorflächen signifikant verkleinern.

Als katalytisch beschichtete Oberflächen können alle abgasführenden Innenoberflächen des Auslaßkanals, des Abgaskrümmers bzw. -sammlers 1 und des Abgasturbinengehäuses, wie auch die Oberflächen des Turbinenlaufrades der Abgasturbine sowie der Auslaßventile dienen. Um die Oberfläche zu vergrößern, sind strukturierte Oberflächen mit Rippen, Noppen o.ä. vorteilhaft.

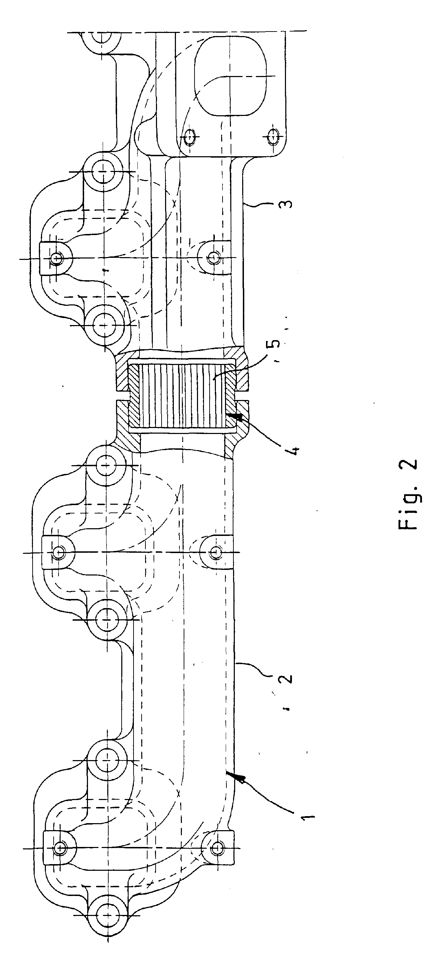

Reicht die katalytische Oberfläche nicht aus, können auch wabenförmige, monolithische oder gewebeartige Trägerstrukturen, die mit einer katalytisch aktiven Schicht versehen sind, in den Abgasstrang eingebracht werden. Die Träger können nach Fig. 2 in Steckbuchsen zwischen zwei Bauteilen des Abgastrakts integriert werden. Es bietet sich an, diese Buchsen in Bereiche zu integrieren, die ohnedies aus mehreren Einzelteilen bestehen, wie z.B. der Übergang vom Zylinderkopf zum Abgaskrümmer oder vom Abgaskrümmer zum Eintritt in die Abgasturbine.

Figur 2 zeigt ein Ausführungsbeispiel. Der dargestellte Bereich des Abgaskrümmers 1 besteht aus zwei getrennten Teilen 2 und 3, die durch eine Steckbuchse 4 miteinander verbunden sind. In der Buchse ist ein Katalysatorträger 5 eingebettet.

Aber auch in einen Zylinderkopf nach dem Auslaßventil, oder direkt in den Einlauf der Abgasturbine können Trägerstrukturen eingesetzt werden.

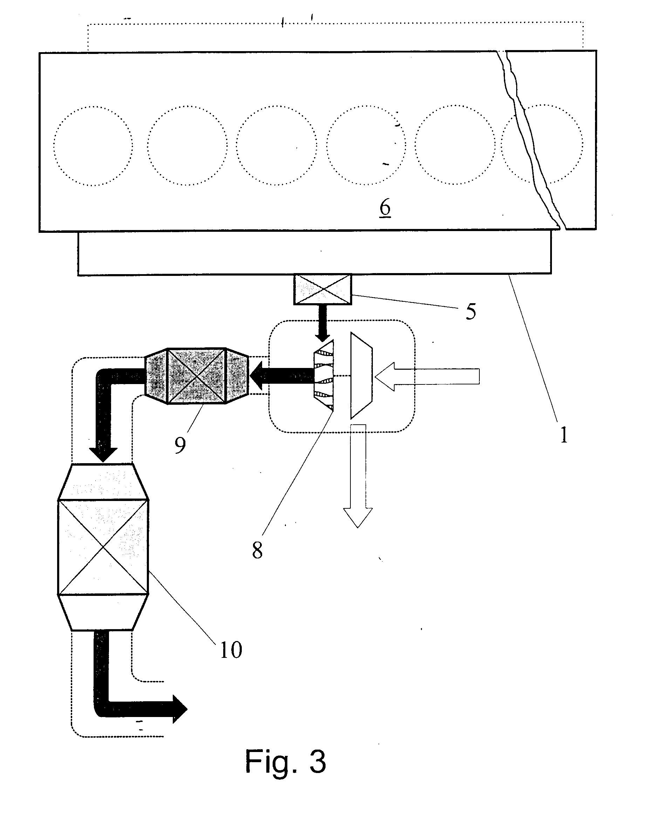

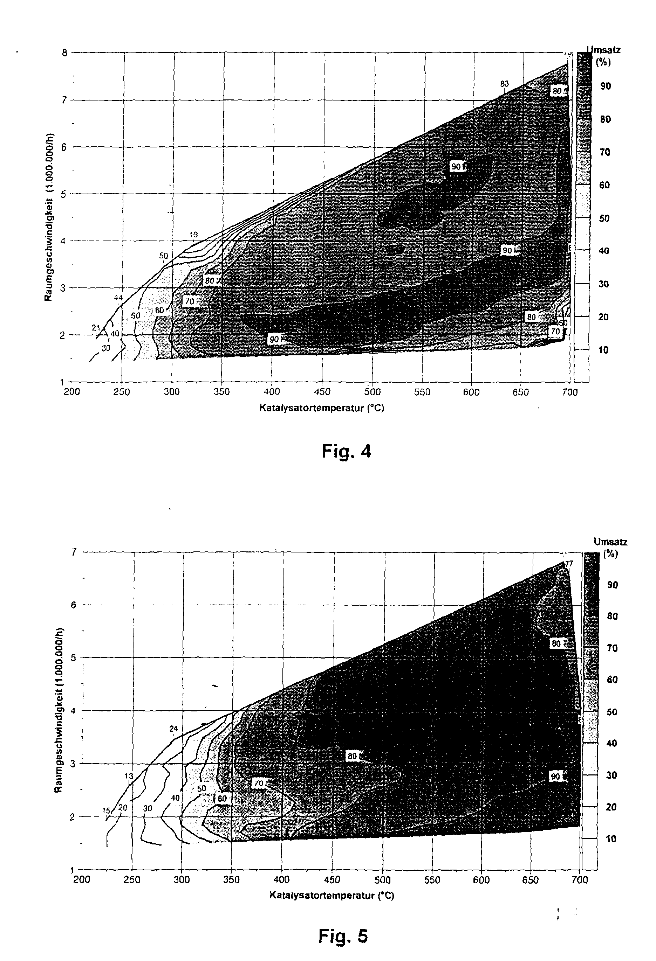

In Figur 3 ist letzteres schematisch dargestellt. Zwischen dem Abgaskrümmer 1 der das Abgas vom Motor 6 abführt, und der Abgasturbine 8 wird der Katalysatorträger 5, beschichtet mit Platin und/oder Palladium, eingesetzt. Die mit einem solchen System erzielbaren CO- und Kohlenwasserstoff-Umsätze sind in den Figuren 4 und 5 dargestellt. Diese Konfiguration ist vor allem bei schwachbelasteten Motoren, wie z.B. im Stadtbusbetrieb, sinnvoll, da hier oft die Anspringtemperatur der auf der Niederdruckseite angebrachten Oxidationskatalysatoren nicht erreicht wird. Der Oxidationskatalysator auf der Hochdruckseite liegt auf einem ca. 200° C höheren Temperaturniveau und so mit ca. 350°C deutlich über der Anspringtemperatur der Katalysatoren.

Bei hochbelasteten Motoren mit hohen Abgastemperaturen kann dem System ein zweiter Katalysator 9 nachgeschaltet werden, der zusätzlich NO zu NO₂ oxidiert und so die Reaktionsgeschwindigkeit eines nachfolgenden NOₓ-Reduktionskatalysators 10, wie z.B. eines SCR-Systems, deutlich erhöht. Da der NO₂-Gehalt bei hohen Temperaturen aus thermodynamischen Gründen wieder zurückgeht, übernimmt der weiter vom Motor entfernte und auf der Niederdruckseite angebrachte und somit kühlere Katalysator 9 die hauptsächliche NO₂-Produktion. Weil der Oxidationskatalysator 9 kein CO und keine Kohlenwasserstoffe oxidieren muß, da diese bereits vor dem Turbolader oxidiert werden, beschleunigt sich die NO₂-Bildung, so daß der Katalysator 9 kleiner ausgeführt werden kann.

Katalysatorträger besitzen im Gegensatz zur oben angesprochenen Beschichtung der konventionellen Abgasanlage eine deutlich größere geometrische Oberfläche, verursachen jedoch einen merklichen Druckverlust, was die der Abgasturbine 8 zur Verfügung gestellte Energie absenkt und somit die Aufladung erschwert. Zudem ist ein Anstieg des Verbrauchs zu verzeichnen.

Vor dem Turbolader beobachtet man eine deutlich geringere Partikelgröße als hinter dem Turbolader, da dort noch hauptsächlich kleinste Primärpartikel, die direkt aus der unvollständigen Verbrennung resultieren, vorliegen. Diese agglomerieren hauptsächlich in und nach der Abgasturbine zu größeren Sekundärpartikeln. Diese relativ voluminösen Sekundärpartikel können an Oxidationskatalysatoren nur schwer oxidiert werden, da ihre spezifische Oberfläche relativ klein ist. Die winzigen Primärpartikel hingegen sind leicht an katalytisch beschichteten Oberflächen zu oxidieren.

Erfindungsgemäß werden solche Oberflächen nach dem Auslaßventil und vor dem Austritt aus der Abgasturbine 8 angebracht. Hierbei kann es sich um platin- und/oder palladiumhaltige Katalysatoren mit extrem feinen Wabenstrukturen, Katalysatoren auf Geweben, Katalysatoren auf statischen Mischerstrukturen, aus Sintermetall- oder Keramikfiltern handeln.

Bei den vor der Abgasturbine 8 vorherrschenden hohen Temperaturen werden die ablaufenden Reaktionen durch Stofftransportvorgänge stark verlangsamt, d.h. der Transport der Edukte zur und/oder der Produkte von der Kataysatoroberfläche stellt den limitierenden Faktor der Reaktion dar. Es ist daher sinnvoll, Oberflächen zu beschichten, die sich in Gebieten mit hohem Turbulenzgrad befinden. Durch Turbulenz wird die Dicke der laminaren Grenzschicht, in der ein großer Widerstand für den Stofftransport bei hohen Temperaturen liegt, verringert und so der Stofftransport verbessert. Gebiete hoher Turbulenz stellen z.B. die Auslaßventile, die Auslaßkanäle in den Zylinderköpfen und das Laufrad der Abgasturbine 8 dar, so daß es sinnvoll ist, diese mit einer Schicht, die mindestens Platin und/oder Palladium enthält, zu versehen. Hierbei ist vor allem das Turbinenlaufrad interessant, da dort neben der hohen Turbulenz bei über 150.000 Umin⁻¹, die den Stofftransport verbessert, eine hohe Anzahl von Partikeln durch Impaktion abgeschieden wird. Beschichtet man das Laufrad katalytisch, so werden die dort abgeschiedenen Kohlenstoffpartikel zu CO und CO₂ oxidiert, also katalytisch verbrannt. Dies hat eine deutliche Verringerung der Partikelemissionen des Motors zur Folge. Sind am Turbolader Vorrichtungen zur Einstellung des optimalen Betriebspunktes des Turboladers, wie z.B. verstellbare Leitschaufeln, variable Turbinengeometrieen - VTG oder Registeraufladung, angebracht, so ist auch eine Beschichtung dieser Baugruppen sinnvoll.

Die platinmetallhaltige Beschichtung, der mit dem Abgas in Berührung kommenden Oberflächen, wird vorzugsweise auf eine. z.B. durch thermische Vorbehandlung der Werkstücke, gewachsene, poröse Oxidschicht durch Imprägnierung mit Platinmetallsalzlösungen aufgebracht. Dies hat den Vorteil, daß im Gegensatz zum üblichen "Washcoating" der Oberfläche zur Ausbildung einer katalytischen Oberflächenschicht, kein Abplatzen der Schicht zu befürchten ist, so daß Erosion und Beschädigung der Turbine vermieden werden können. Dies ist auch auf die geringe Dicke der getränkten Oxidschicht von ca. 5 µm zurückzuführen, die bei den vorliegenden hohen Temperaturen für eine Oxidation ausreichen.

Soll trotzdem eine konventionelle "Washcoat"- Beschichtung eingesetzt werden, so ist auf verbesserte Haftung auf der Oberfläche und geringe Schichtdicken zu achten, da durch hohe Zentrifugalkräfte und Druckpulsationen die erhöhte Gefahr des Abplatzens der Beschichtung besteht.

### Ausführungsbeispiel 1:

Zur Herstellung einer platinhaltigen Katalysatorbeschichtung auf der Oberfläche eines Turbinenlaufrades, typischerweise aus einer Nickelbasis-Gußlegierung mit den wesentlichen Legierungsbestandteilen Cr>10%, Mo>1% und Al>2%, wird auf dem Laufrad durch Glühen bei 800ºC an Luft eine, vorzugsweise 5 - 10 µm dicke, poröse Oxidschicht erzeugt.

Anschließend wird das Laufrad in eine [Pt(NH₃)₄] (NO₃)₂- bzw. Pd(NO₃)₂-Lösung getaucht, bei 110°C getrocknet und bei 500°C 1 h kalziniert. Die Konzentration der Edelmetallösung wird so gewählt, daß der Edelmetallgehalt in der Oberflächenoxidschicht des Turboladerlaufrades etwa 0,5-2 % beträgt.

Untersuchungen mit einem derart beschichteten Turbinenlaufrad an einem MAN Reihensechszylinder D2866 121 Euro II-Dieselmtor ergaben an einem hochdynamischen Prüfstand eine Partikelverminderung um 30 % und eine Anhebung der NO₂-Konzentrationen um 300 % im Europäischen-Transienten-Zyklus (ETC ).

### Ausführungsbeispiel 2:

Aus dem im Ausführungsbeispiel 1 untersuchten Motor wurde vor dem Turbolader ein metallischer Katalysatorträger mit einer Zelldichte von 200 cpsi und einem Volumen von 170cm³ eingebracht. Die Beschichtung bestand aus einer Aluminiumsilikat getragenen Platinmetallbeschichtung mit einem Platinmetallgehalt von 90g/ft³. Die erzielten CO und Kohlenwasserstoffumsätze sind in den Figuren 4 und 5 dargestellt. Die NO₂-Gehalte stiegen von maximal 8 % auf 20 %.

### Ausführungsbeispiel 3:

Dem in Ausführungsbeispiel 2 beschriebenen System wird ein Oxidationskatalysator 9 ( Fig. 3 ) nachgeschaltet, der als NO₂-Produzent für ein nachgeschaltetes Harnstoff-SCR-System dienen soll. Ein NO₂-Gehalt von 50 % an den Gesamt-NOₓ-Emissionen hat sich als vorteilhaft erweisen und soll mit dem System erreicht werden. Durch den Einsatz eines kleinen Katalysators vor dem Laufrad der Abgasturbine, war es möglich, den eigentlichen Oxidationskatalysator von 51 auf 2,51 zu verkleinern, ohne daß ein merklicher Rückgang des NO₂-Gehaltes zu verzeichnen war. Die Zelligkeit des nachgeschalteten Oxidationskatalysators betrug 400 cpsi, der Platingehalt der Beschichtung 30 g/ft³.

### Ausführungsbeispiel 4:

Zur Herstellung einer edelmetallhaltigen Beschichtung auf der Oberfläche eines ferriti schen oder austenitischen gußeisernen Abgaskrümmers, wird die Gußhaut durch Beizen mit einer Säurelösung entfernt. Anschließend wird bei 800°C 18h ausgelagert ( Erzeugung einer Oxidschicht ) und wie oben mit einer Edelmetall-Salzlösung imprägniert.

### Ausführungsbeispiel 5:

Zur Herstellung einer platinmetallhaltigen katalytisch aktiven Schicht von 2-15 µm Dicke auf der Oberfläche eines Turbinenlaufrades wird eine wäßrige Beschichtungsdispersion mit 20-50 %-igem Gehalt an Platinmetall-Aluminiumsilikat durch Sprühen, Bestreichen oder Tauchen aufgebracht, an Luft bei 150°C getrocknet und bei 600°C kalziniert. Das Platinmetall-Aluminiumsilikatpulver wird auf bekanntem Weg durch Imprägnieren eines Aluminiumsilikatpulvers mit 1,5-40 % SiO₂-Gehalt und einer spezifischen Oberfläche von 130 - 250m²/g mit [Pt(NH₃)₄](NO₃)₂ oder/und Pd(NO₃) hergestellt. Der Platinmetallgehalt des Pulvers beträgt 0,02-3 Gew%.

### Ausführungsbeispiel 6:

Für die Beschichtung anderer Oberflächen (Abgaskrümmer, Auslaßkanäle im Zylinderkopf, Turbinengehäuse ) wird analog zu Ausführungsbeispiel 3 gearbeitet. Die Beschichtung von wabenförmigen Metallträgern erfolgt durch Tauchen und Ausblasen von überflüssigem "Washcoat". Die Washcoatmenge sollte zwischen 40 und 120g/l Wabenvolumen liegen.

## Patentansprüche

1. Verfahren zur Oxidation von NO, CO, Kohlenwasserstoffen und Kohlenstoffpartikeln im Abgas von aufgeladenen Brennkraftmaschinen durch Pulsbeaufschlagung von katalytisch beschichteten Oberflächen, dadurch gekennzeichnet, daß vom Abgas berührte Oberflächen in einem Bereich zwischen einem Auslaßventil und dem Ausgang einer Abgasturbine (8) mit einer katalytisch aktiven Beschichtung versehen werden, die mindestens Platin und/oder Palladium enthält.

2. Verfahren nach Anspruch 1, dadurch gekennzeichnet, daß die Beschichtung mit Platin und/oder Palladium bevorzugt an den Teilen der Oberfläche erfolgt, die in Zonen besonders turbulenter Strömung, wie z.B. Auslaßventile oder Zylinderkopf, liegen.

3. Verfahren nach den Ansprüchen 1 und 2, dadurch gekennzeichnet, daß die katalytisch beschichten Oberflächen strukturiert ausgeführt werden.

4. Verfahren nach den Ansprüchen 1 bis 3, dadurch gekennzeichnet, daß die platin- und/oder palladiumhaltige Oberfläche durch Oxidation der Trägerwerkstoffoberfläche und anschließende Imprägnierung dieser porösen Oxidschicht mit platin- und/oder palladiumhaltiger Lösung ausgebildet wird.

5. Verfahren nach den Ansprüchen 1 bis 3, dadurch gekennzeichnet, daß die katalytisch aktive Oberfläche durch Beschichtung der Trägerwerkstoffoberfläche mit Aluminiumsilikat-getragenem Platin und/oder Palladium erzeugt wird.

6. Verfahren nach Anspruch 5, dadurch gekennzeichnet, daß der SiO₂-Gehalt des Aluminiumsilikats zwischen 1,5 % und 40 % beträgt.

7. Verfahren nach Anspruch 5 und 6, dadurch gekennzeichnet, daß die spezifische Oberfläche des Alumiumsilikatträgers 30-300 m²/g, vorzugsweise 130-250m²/g, beträgt.

8. Verfahren nach den Ansprüchen 1 bis 7, dadurch gekennzeichnet, daß zur verbesserten Kohlenstoffpartikeloxidation die Abgasturbine (8) und/oder das Turbinengehäuse mit einer mindestens platin- und/oder palladiumhaltigen Schicht versehen werden, um die durch Impaktion auf diesen Oberflächen abgeschiedenen Partikel zu oxidieren.

9. Verfahren nach den Ansprüchen 1 bis 7, dadurch gekennzeichnet, daß beim Einsatz von Bauteilen zur Einstellung des optimalen Betriebspunktes der Abgasturbine, wie z.B. die Leitschaufeln bei einer variablen Turbinengeometrie, diese Bauteile mit einer katalytisch aktiven Schicht versehen werden.

10. Verfahren nach den Ansprüchen 1 bis 7, dadurch gekennzeichnet, daß wabenförmige oder gewebeartige oder monolithische Katalysatorträger (5), die mit einer mindestens platin- und/oder palladiumhaltigen Schicht versehen sind, in den Abgastrakt vor Eintritt in ein Laufrad der Abgasturbine (8) eingebracht werden.

11. Verfahren nach den Ansprüchen 1 bis 7, dadurch gekennzeichnet, daß mit mindestens Platin und/oder Palladium beschichtete Strukturen zur Partikelabscheidung, wie Feinstzeller, optisch dichte Strukturen, Sintermetall-, Keramik-oder Gewebefilter, vor Eintritt in ein Laufrad der Abgasturbine (8) in den Abgastrakt eingebracht werden.

12. Verfahren nach den Ansprüchen 9 bis 11, dadurch gekennzeichnet, daß Trägerstrukturen in einer Steckbuchse fixiert werden, die zwischen zwei Bauteilen des Abgastraktes vor Eintritt in ein Laufrad der Abgasturbine (8) eingebracht wird.

13. Verfahren nach den Ansprüchen 1 bis 12, dadurch gekennzeichnet, daß nach der Abgasturbine (8) ein zweiter Oxidationskatalysator vorgesehen wird, der eine zusätzliche NO-Oxidation zu NO₂ bewirkt.

14. Verfahren nach den Ansprüchen 1 bis 13, dadurch gekennzeichnet, daß dem System ein SCR-Katalysator zur NOₓ-Verminderung nachgeschaltet ist.
